# EUROPÄISCHE PATENTSCHRIFT

(11) **EP 0 929 395 B1**
(45) Veröffentlichungstag und Bekanntmachung des Hinweises auf die Patenterteilung: **09.08.2000**
(21) Anmeldenummer: 97912097.9
(22) Anmeldetag: 02.10.1997
(51) Int. Cl.: B29D 23/20, B65D 35/22

(54) **VORRICHTUNG ZUR HERSTELLUNG VON ZWEI- ODER MEHRKAMMERTUBEN**
FACILITY FOR MANUFACTURING TWO- OR MULTI-COMPARTMENT TUBES
INSTALLATION POUR LA FABRICATION DE TUBES A DEUX OU PLUSIEURS COMPARTIMENTS

(30) Priorität: 02.10.1996 DE 19640833
(43) Veröffentlichungstag der Anmeldung: 21.07.1999
(73) Patentinhaber: AISA AUTOMATION INDUSTRIELLE SA, 1896 Vouvry (CH)
(72) Erfinder: KELLER, Gerhard, CH-1805 Jongny (CH); FAVRE, Dominique, CH-1874 Champéry (CH)
(74) Vertreter: Patentanwälte Zellentin & Partner
(86) Internationale Anmeldenummer: EP9705422
(87) Internationale Veröffentlichungsnummer: WO9814319

(56) Entgegenhaltungen:
- DE-A- 2 453 503
- DE-A- 3 616 207
- DE-A- 19 522 169
- GB-A- 2 011 344
- US-A- 2 390 171
- US-A- 3 081 926
- US-A- 3 101 850
- US-A- 3 227 319
- US-A- 3 290 422
- US-A- 3 446 688
- US-A- 4 768 323
- US-A- 5 076 470
- PATENT ABSTRACTS OF JAPAN vol. 016, no. 450 (M-1312), 18.September 1992 -& JP 04 158017 A (DAIWA CAN CO LTD), 1.Juni 1992,

## Beschreibung

Die Erfindung betrifft eine Vorrichtung zur Herstellung von Zwei- oder Mehrkammertuben.

Es sind verschiedene Vorrichtungen zur Herstellung von Einkammertuben unter Verwendung von Dornen bekannt, die mehreren Arbeitsstationen zuführbar sind, wobei mindestens in einer Arbeitsstation auf die Dorne ein Rohrkörper aufgeschoben wird, der in weiteren Stationen mit einem vorgefertigten oder angeformten Tubenkopf fest verbunden wird.

Es besteht das Bedürfnis, Zwei- oder Mehrkammertuben unter Verwendung von vorgefertigten Rohrkörpern herzustellen, die im Inneren der Tube mittels einer oder mehrerer Trennwände den Rohrkörper in zwei oder mehr zueinander parallele Längskammern trennen.

Derzeit sind keine Vorrichtungen zur Herstellung von Mehrkammertuben unter Verwendung eines vorgefertigten Rohrkörpers mit einer Trennwand oder mehreren Trennwänden bekannt.

Aus der US-A-5,076,470 ist eine Tube aus zwei oder drei konzentrisch angeordneten Tubenrohrkörpern bekannt, die mit einem Tubenkopf verbindbar sind, der für jede durch die konzentrische Anordnung der einzelnen Rohrkörper unterschiedlichen Durchmessers gebildete ringförmige Kammer eine getrennte Ausgabeöffnung enthält, wobei zur Verbindung der einzelnen Rohrkörper mit dem Kopfstück die einzelnen Rohrkörper auf konzentrisch angeordnete Dorne aufschiebbar sind, wobei zwischen den einzelnen konzentrischen Dornen relative axiale Verschiebungen möglich sind.

Aufgabe der Erfindung ist es, eine Vorrichtung zur Herstellung von Zwei- oder Mehrkammertuben mittels eines vorgefertigten Rohrkörpers anzugeben.

Diese Aufgabe wird durch eine Vorrichtung mit den Merkmalen des Anspruch 1 gelöst. Vorteilhafte Ausgestaltungen sind den Unteransprüchen zu entnehmen.

Durch die Verwendung von einzelnen Teildornen, zwischen denen ein Trennspalt verbleibt, wobei die jeweiligen Teildorne einen Querschnitt aufweisen, der dem Querschnitt des Hohlraums einer einzelnen Kammer der jeweilig gewünschten Zwei- oder Mehrkammertube entspricht, ist es möglich, die vorgefertigten Rohrkörper mit Trennwänden auf die aus Teildornen bestehenden Dorne aufzubringen, wobei die jeweilige Trennwand bzw. die jeweiligen Trennwände in den oder die Trennspalte eingeführt werden. Der so positionierte Rohrkörper mit Trennwand wird dann in einem oder mehreren Arbeitsschritten mit einem Tubenkopf versehen. Vorzugsweise erfolgt dies im Preß- bzw. Spritzpreßverfahren oder auch im Spritzgußverfahren, wobei gleichzeitig auch mit dem Anformen des Tubenkopfs Trennstege im Kopf und Verbindungen der Trennstege mit den Trennwänden hergestellt werden.

Nachstehend wird die Erfindung anhand von Ausführungsbeispielen unter Bezug auf Zeichnungen näher erläutert. Es zeigt:
- Fig. 1: einen aus zwei Teildornen bestehenden Dorn,
- Fig. 2: einen Schnitt nach Linie II-II in Fig. 1,
- Fig. 3: einen Hilfsdorn mit Rohrkörper in schematischer Darstellung,
- Fig. 4a: einen Querschnitt entlang Linie IV-IV in Fig. 3, wobei die Trennwand am Umfang des Rohrkörpers anliegt,
- Fig. 4b: das gleiche wie in Fig. 4a, wobei jedoch die Trennwand in der Aussparung im Hilfsdorn anliegt.
- Fig. 5: den Querschnitt eines Dorns aus drei gleichen Teildornen für eine Dreikammertube mit gleichgroßen Kammern,
- Fig. 6: den Querschnitt eines Dorns aus drei Teildornen für eine Dreikammertube mit einer größeren und zwei kleineren Kammern.

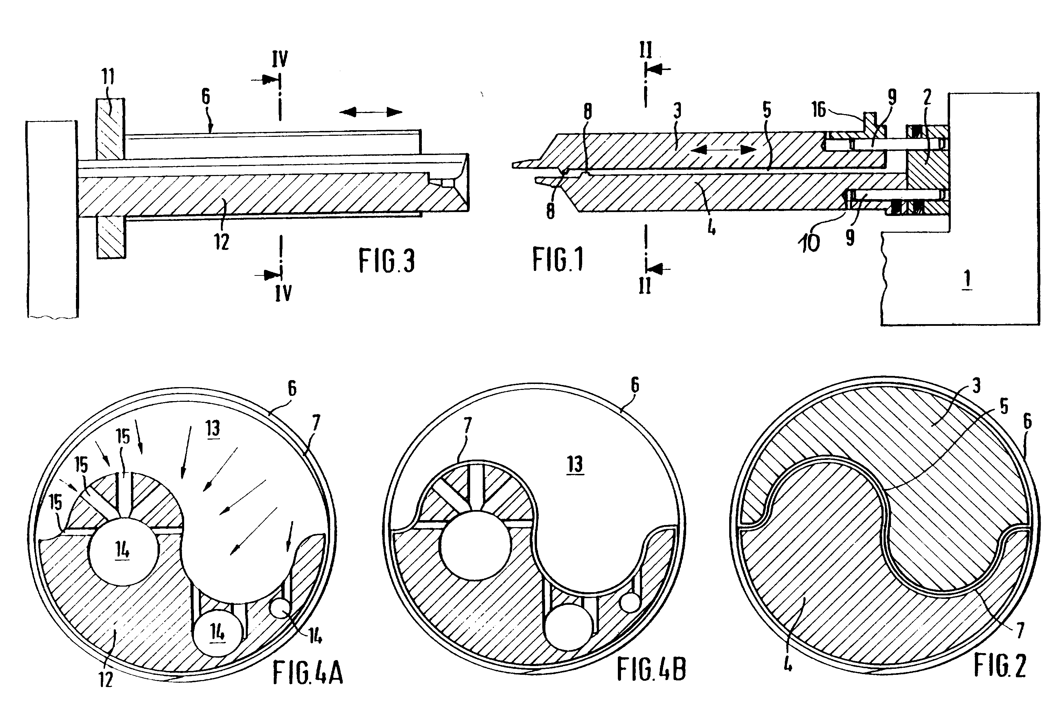

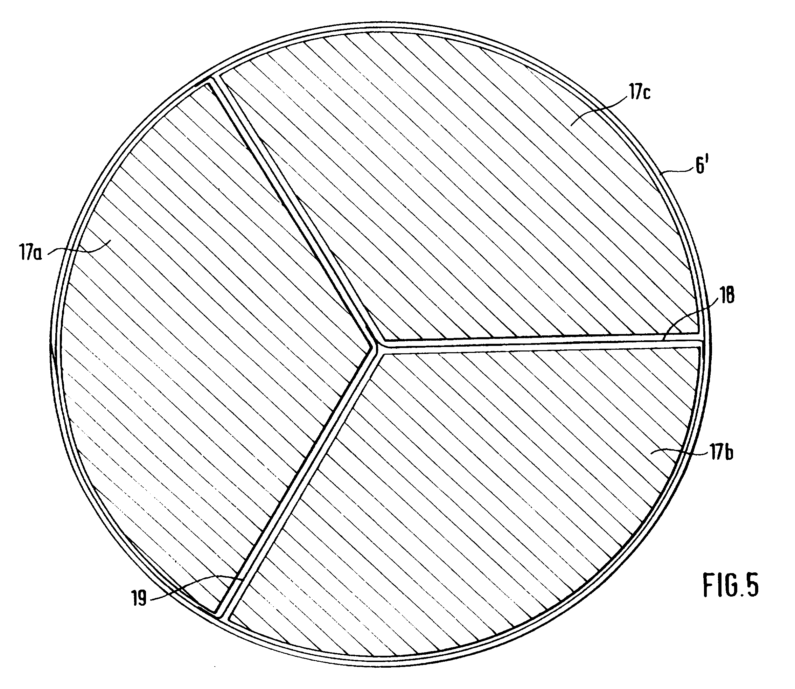

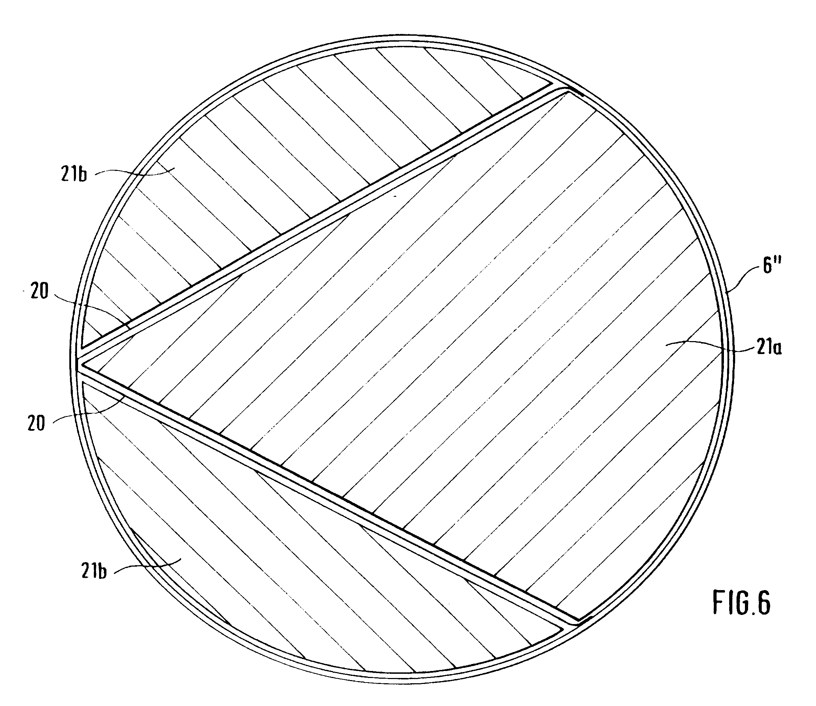

Bei dem in Fig. 1 gezeigten Ausführungsbeispiel ist auf einem Transportmittel 1, das z. B. ein Drehteller, eine Drehtrommel, ein Drehtisch, eine Transportkette oder dergleichen sein kann, mittels eines Halters 2 ein aus zwei Teildornen 3, 4 bestehender Dorn angeordnet, der mit seiner Außenkontur die Innenkontur einer zu fertigenden Zweikammertube inklusive Kopfbereich wiedergibt. Zwischen den beiden Teildornen 3, 4 ist ein Trennspalt 5 ausgeführt, der zur Aufnahme einer im Rohrkörper 6 anzuordnenden Trennwand 7 dient. Der Trennspalt 5 kann im Querschnitt gekrümmt, beispielsweise wie in Fig. 2 dargestellt S-förmig, oder auch geradlinig (s. Fig. 6), auch geradlinig und abgewinkelt (s. Fig. 5) sowie aus geradlinigen und gekrümmten Abschnitten (nicht dargestellt) beliebig gestaltet sein.

Vorzugsweise ist ein Teildorn 4 fest und der andere Teildorn 3 parallel zum Teildorn 4 verschiebbar am Halter 2 angeordnet, der wiederum vorzugsweise z. B. für weitere Operationen drehbar gelagert und auch antreibar sein kann. Die Teildorne 3, 4 weisen vorzugsweise gegeneinander gerichtete Vorsprünge 8 auf, die dazu dienen, den Durchgangsquerschnitt des Trennspaltes 5 in einer Querschnittsebene zu verkleinern. Wenn beide Teildorne 3 und 4 am Halter 2 anliegen, also nicht gegeneinander verschoben sind, liegen die Vorsprünge 8 in einer Ebene. Vorzugsweise sind die Vorsprünge 8 an ihren Spitzen gerundet und weisen eine einer Glockenkurve angenäherte Querschnittsform auf, die ein Hineingleiten einer Trennwand 7 bei ihrem Einführen in den Trennspalt 5 begünstigt. Mindestens ein Teildorn 3 oder 4 weist Kanäle 9 auf, die mit Austrittsöffnungen 10 am Außenumfang des jeweiligen Teildorns 3 oder 4 und/oder zum Trennspalt 5 hin (beides nicht dargestellt) enden. Die Kanäle 9 können auch in allen vorhandenen Teildornen 3 und 4; 17a - c; 21a, b ausgeführt sein und sind abschaltbar an eine nicht dargestellte Vakuumquelle anschließbar. Das Kanalsystem dient dazu, den positionierten Rohrkörper 6 beim Verschieben mit dem beweglichen Teil dorn 3 bzw. in seiner Endlage auf dem Dorn an seinem Umfang und/oder bezüglich seiner Trennwand positioniert festzuhalten, insbesondere beim Transport und/oder bei weiteren Bearbeitungsschritten.

Sofern die Rohrkörper 6 mit einer relativ steifen im Raum stabil stehenden Trennwand 7 versehen sind, kann der Rohrkörper 6 mittels einer geeigneten Vorrichtung, die vorzugsweise auch eine Dreheinrichtung enthält, koaxial gegenüber den Teildornen 3, 4 derart ausgerichtet werden, daß die im Rohrkörper 6 befestigte Trennwand 7 gegenüber dem Trennspalt 5 zwischen den Teildornen 3, 4 zu liegen kommt. Mittels eines in Fig. 3 schematisch dargestellten Schiebers 11 kann dann der ausgerichtete Rohrkörper 6 auf die Teildorne 3, 4 aufgeschoben werden, wobei die Trennwand 7 in den Trennspalt 5 eingeht.

Bei Verwendung von relativ steifem Trennwandmaterial können die beiden Teildorne 3, 4 in ihrer Ausgangsstellung am Halter 2 anliegend verbleiben, d. h. sie können auch beide fest am Halter 2 angeordnet sein. Vorzugsweise könnte dann der Eingang des Trennspaltes 5 zum leichteren Einführen der Trennwand 7 auch leicht trichterförmig oder konisch (nicht dargestellt) gestaltet sein.

Bei verhältnismäßig dünnen bis sehr dünnen Trennwänden 7 ist es vorteilhaft, wenigstens einen Teildorn 3, wie oben beschrieben axial und parallel zum anderen Teildorn 4 hin- und herbeweglich auszuführen. Bei mehr als zwei Teildornen können auch mehrere Teildorne, vorzugsweise unterschiedlich weit ausfahrbar angeordnet sein. Bei einer gegeneinander verschobenen Stellung der Teildorne 3, 4, wie sie in Fig. 1 gezeigt ist, sind auch die Vorsprünge 8 gegeneinander verschoben und vergrößern dadurch jweils dort den Durchgangsquerschnitt des Trennspalts 5 gegenüber ihrer einander unmittelbar gegenüberliegenden Position, so daß die Trennwand 7 in Verbindung mit den gerundeten Abschnitten der Vorsprünge 8 leichter in den Trennspalt 5 einführbar ist. Wird dann der Teildorn 3 in Fig. 1 nach rechts in seine eine Endlage zurückverschoben, liegen die Vorsprünge 8 der beiden Teildorne 3, 4 in einer Ebene und bilden dadurch eine Führung und auch eine Stütze für die Trennwand 7 benachbart zum Kopfbereich.

Wenn ein Trennsteg oder gegebenenfalls mehrere Trennstege (nicht dargestellt) separat oder gleichzeitig mit dem eigentlichen Tubenkopf (nicht dargestellt) unter dessen bzw. deren Verbindung mit der Trennwand 7 bzw. den Trennwänden 18, 19 Fig. 5, 20 Fig. 6 durch schmelzflüssiges Kunststoffmaterial hergestellt werden soll, kann der Eingangsbereich des Trennspaltes 5, vorzugsweise bis zu den Vorsprüngen 8, eine größere lichte Weite aufweisen als der Trennspalt 5 hinter den Vorsprüngen 8. Hierdurch ist auch die Stärke des Trennstegs/der Trennstege im Kopf und dessen bzw. deren Verbindung mit der Trennwand 7 oder mehreren Trennwänden im Rohrkörper 6 in weiten Bereichen gestaltbar. Im sich unmittelbar gegenüberliegenden Zustand der beiden Vorsprünge 8 ist die lichte Weite jedes Trennspalts 5 zwischen den Vorsprüngen 8 vorzugsweise so berechnet, daß der Abstand der Vorsprünge 8 voneinander nur wenig die Stärke der Trennwand 7 des Rohrkörpers 6 überschreitet, so daß die Vorsprünge 8 beim Herstellen der Trennstege den Formhohlraum für den anzuformende Trennsteg begrenzen.

Wenn eine vorgesehene Trennwand 7 sehr weich und/oder sehr dünn und damit auch sehr flexibel ist, ist der Vorrichtung vorzugsweise ein Hilfsdorn 12 (s. Fig. 3 und 4) zur Aufnahme eines Rohrkörpers 6 mit Trennwand 7 zugeordnet. Jeder Hilfsdorn 12 weist einen Querschnitt auf, der die Form einer der Kammern, vorzugsweise der größten Kammer bei unterschiedlich großen Kammern, einer Zweikammertube bzw. einer Mehrkammertube aufweist. Jeder Hilfsdorn 12 weist eine Aussparung 13 auf, die über seine gesamte Länge geht und im Querschnitt dem Querschnitt der jeweils anderen Kammer bzw. aller weiteren Kammern entspricht. Der Hilfsdorn 12 ist vorzugsweise als Vollkörper gestaltet, in dem ein System von Kanälen 14 vorgesehen ist, die über die Länge unterschiedliche Durchgangssquerschnitte aufweisen können und vorzugsweise über den Querschnitt verteilt angeordnet sind und mit über den Querschnitt als auch über die Länge verteilt angeordneten Durchgangsbohrungen 15 versehen sind, die alle in die Aussparung 13 münden. Die Kanäle 14 und damit auch die Durchgangsbohrungen 15 sind an eine Vakuumquelle (nicht gezeigt) anschließbar, wobei in der Aussparung 13 ein Vakuum erzeugt werden kann, um die im Ausgangszustand an der Rohrwandung 6 anliegende Trennwand 7 (s. Fig. 4a) in die Aussparung 13 anzusaugen, wobei im Endzustand die Trennwand 7 direkt am Hilfsdorn 12 anliegt (s. Fig. 4b). Bei dünnen Trennwänden können statt des Vakuums auch elektrostatische Anziehungskräfte eingesetzt werden.

Die oben erwähnte ausgerichtete Zufuhr des Rohrkörpers 6 auf den Hilfsdorn 12 muß gewährleisten, daß die Trennwand 7, zumindest ein gewünschter Teilabschnitt davon, sich ungehindert in die Aussparung 13-dort anliegend - bewegen kann.

Der Hilfsdorn 12 mit der angesaugten Trennwand 7 bzw. dem angesaugten Trennwandabschnitt ist bereits oder wird gegenüber den Teildornen 3, 4 so ausgerichtet, daß die in der Aussparung 13 lagefixierte Trennwand 7 gegenüber dem Trennspalt 5 zwischen den Teildornen 3, 4 zu liegen kommt. Dann wird der Rohrkörper 6 mittels des Schiebers 11 auf die Teildorne 3, 4 aufgeschoben. Beim Aufschieben nehmen die Teildorne 3, 4 die in Fig. 1 dargestellte zueinander verschobene Stellung ein, damit die dünne Trennwand 7 auf einfache Weise und an den Vorsprüngen 8 vorbei in den Trennspalt 5 gelangen kann. Wenn der Rohrkörper 6 mit seinem vorderen Ende gegen einen Anschlag 16 (Fig. 1) am verschiebbaren Teildorn 3 stößt, wird der Vorschub des Schiebers 11 (Fig. 2) gestoppt und gegebenenfalls das Kanalsystems des Teildorns 3 an eine Vakuumquelle angeschlossen, wodurch der Rohrkörper 6 am Teildorn 3 fixiert wird. Dann wird der Teildorn 3 in seine am Halter 2 anliegenden Endstellung bewegt. Es kann dann auch über den Teildorn 4 eine Lagefixierung erfolgen, wenn dieser ebenfalls an eine Vakuumquelle angeschlossen wird. In der lagefixierten Stellung wird der Rohrkörper 6 einer oder mehreren weiteren Arbeitsstationen zugeführt, wo die Fertigung der Trennstege separat oder gleichzeitig mit dem Kopf, sowie die Verbindung des Trennstegs mit der Trennwand bzw. der Trennstege mit den Trennwänden als auch mit dem gegebenenfalls vorgefertigten Kopf mit den gegebenenfalls vorher hergestellten Trennstegen und dem Rohrkörper - gegebenenfalls auch in mehreren Einzel- oder Teilschritten - erfolgt.

In Fig. 5 sind drei Teildorne 17a, b, c dargestellt, wobei der Rohrkörper 6 eine unter einem Winkel angeordnete Trennwand 18, deren beide Enden am Rohrkörper 6' befestigt sind und eine Verbindungstrennwand 19 aufweist, die einerseits im Knick der unter einem Winkel angeordneten Trennwand 18 und andererseits am Rohrkörper 6' befestigt ist. Im Ausführungsbeispiel gemäß Fig. 5 sind drei gleich große Teildorne und damit auch Kammern dargestellt.

Im Ausführungsbeispiel gemäß Fig. 6 sind zwei Trennwände 20 als Sekanten zum runden Querschnitt eines Rohrkörpers 6" ausgebildet, die in einem gemeinsamen Punkt am Rohrkörper 6" befestigt sind. Die Teildorne 21a, b weisen wiederum die Querschnitte auf, die den vorgesehenen Kammerquerschnitten entsprechen.

Bei derartigen Mehrkammertuben wird durch die Anordnung der Trennwände 18, 19, 20 im Rohrkörper 6', 6" dieser relativ formstabil, so daß gegebenenfalls auf einen Hilfsdorn verzichtet werden kann. Sofern ein Hilfsdorn eingesetzt wird, sollte sein Querschnitt vorzugsweise dem Querschnitt der größten Kammer entsprechen.

Die Vorrichtung kann auch dazu eingesetzt werden, um zunächst vorgefertigte separate Trennwände in einem Trennspalt bzw. gegebenenfalls mehreren vorgesehenen Trennspalten anzuordnen, wobei die Trennspalte wie beispielsweise oben dargestellt und/oder beschrieben ausgeführt sein können. Die Trennwände weisen dann aus den Dornen hervorragende Seitenflügel (nicht dargestellt) auf, die vorzugsweise an der Stelle ihres Austritts aus dem Dorn abgeknickt sind oder dort einen Falz aufweisen, damit sie sich möglichst dicht an die Außenwand des Dorns anlegen. Dies kann auch durch eine separate Andrück- bzw. Anformvorrichtung erfolgen. Auf einen solchen mit separat hergestellten Trennwänden versehenen Dorn wird dann ein separater Rohrkörper - ohne Trennwand bzw. Trennwände-derart aufgeschoben, daß die Flügel dicht an der inneren Rohrwandung anliegen.

Die Verbindung mit einem Kopf und mit Trennstegen erfolgt auf die oben beschriebene Weise. Bei genügend breiten Flügeln kann, insbesondere wenn die in den Kammern unterzubringenden einzelnen Komponenten sich nicht oder nur schwer mischen lassen und/oder deren Trennung voneinander nicht zwingend erforderlich ist, auf eine feste und damit die Kammern abdichtend voneinander separierende Verbindung der Flügel mit der Rohrwandung verzichtet werden. Es können aber in den Teildornen auch geeignete Verbindungsmittel beispielsweise zum Verschweißen der Flügel mit dem Rohrkörper durch Zufuhr von Kontaktwärme z. B. mittels durch HF erwärmter in den Teildornen gegenüber den Flügeln angeordneter geeigneter Metallteile vorgesehen sein.

Die Rohrkörper können aus beliebigem Material aus einem oder mehreren Kunststoffen, aus geschichtetem Material, auch mit Sperrschichten aus Metall oder Kunststoff durch eine Überlappungsnaht oder durch Extrudieren hergestellt sein. Auch bezüglich der Trennwände gibt es keine Einschränkungen bezüglich des Materials.

Das Vakuum kann insbesondere in den Hilfsdornen 12 auch so gesteuert werden, daß über den Querschnitt der Aussparung 13 ein sukzessives Ansaugen und damit auch sukzessives Anliegen der Trennwand 7 erfolgt.

## Patentansprüche

1. Vorrichtung zur Herstellung von Zwei- oder Mehrkammertuben aus Rohrkörpern (6, 6', 6"), die eine Trennwand (7) oder mehrere Trennwände (18, 19; 20) enthalten und mit einem Tubenkopf mit verschließbarer Ausgabeöffnung versehen werden, unter Verwendung von Dornen, die die Innenkontur der gewünschten Tube wiedergeben und Arbeitsstationen zuführbar sind, wobei die Dorne entsprechend der Anzahl der vorgesehenen Kammern in einzelne Teildorne (3, 4; 17a, b, c; 21a, b) unter Belassung eines Trennspaltes (5) zwischen ihnen längsgeteilt sind und die jeweiligen Teildorne (3, 4; 17a, b, c; 21a, b) einen Querschnitt aufweisen, der dem Querschnitt des Hohlraums einer einzelnen Kammer der jeweiligen Mehrkammertube entspricht.

2. Vorrichtung nach Anspruch 1,
dadurch gekennzeichnet,
daß sie mindestens einen Hilfsdorn (12) zur Aufnahme eines Rohrkörpers (6) mit mindestens einer an seiner Innenwand auslenkbar befestigten Trennwand (7) aufweist, wobei der Hilfsdorn (12) zu einem der Teildorne (3; 4) mindestens eines Dornes in eine koaxiale Stellung bringbar ist, und mindestens eine zum Umfang offene axial ausgerichtete Aussparung (13) aufweist, und daß Mittel zum Einbringen mindestens eines Abschnitts der auslenkbaren Trennwand (7) in die Aussparung (13) und zum Aufschieben des Rohrkörpers (6) vom Hilfsdorn (12) auf einen Dorn vorgesehen sind.

3. Vorrichtung nach Anspruch 2,
dadurch gekennzeichnet,
daß jeder Hilfsdorn (12) als Vollkörper ausgebildet ist, dessen Querschnitt dem Querschnitt einer der Kammern der herzustellenden Mehrkammertube entspricht und die Aussparung (13) den restlichen Querschnitt der herzustellenden Mehrkammertube wiedergibt.

4. Vorrichtung nach einem der Ansprüche 2 oder 3,
dadurch gekennzeichnet,
daß das Mittel zum Einbringen eines Abschnitts der Trennwand (7) in die Aussparung (13) eine abschaltbare Vakuumquelle enthält.

5. Vorrichtung nach einem der Ansprüche 1 bis 4,
dadurch gekennzeichnet,
daß jeder Trennspalt (5) senkrecht zu seiner Längserstreckung einen geradlinigen Querschnitt aufweist.

6. Vorrichtung nach einem der Ansprüche 1 bis 4,
dadurch gekennzeichnet,
daß jeder Trennspalt (5) senkrecht zu seiner Längserstreckung einen gekrümmten Querschnitt aufweist.

7. Vorrichtung nach Anspruch 6,
dadurch gekennzeichnet,
daß der Trennspalt (5) senkrecht zu seiner Längserstreckung einen S-förmigen Querschnitt aufweist.

8. Vorrichtung nach einem oder mehreren der Ansprüche 1 bis 7,
dadurch gekennzeichnet,
daß mindestens ein Teildorn (3) gegenüber einem bzw. mehreren anderen Teildorn(en) (4) axial und parallel relativ zueinander verschiebbar angeordnet ist.

9. Vorrichtung nach Anspruch 8,
dadurch gekennzeichnet,
daß ein Teildorn (4) unbeweglich auf einem Halter (2) angeordnet ist.

10. Vorrichtung nach Anspruch 9,
dadurch gekennzeichnet,
daß der Halter (2) drehbar angeordnet ist.

11. Vorrichtung nach einem oder mehreren der Ansprüche 1 bis 10,
dadurch gekennzeichnet,
daß jeder Teildorn (3, 4) wenigstens in einer Ebene den Querschnitt des Trennspalts (5) zwischen ihnen verkleinernde gegeneinander gerichtete Vorsprünge (8) aufweist.

12. Vorrichtung nach Anspruch 11,
dadurch gekennzeichnet,
daß jeder Trennspalt (5) ausgehend vom Abschnitt mit verkleinertem Querschnitt einen Eingangsabschnitt mit vergrößertem Querschnitt aufweist.

13. Vorrichtung nach einem oder mehreren der Ansprüche 1 bis 12,
dadurch gekennzeichnet,
daß mindestens ein Teildorn (3) ein Kanalsystem aufweist, das mit Ausgangsöffnungen versehen ist, die zum Trennspalt (5) und/oder zum Außenumfang gerichtet sind, wobei das Kanalsystem abschaltbar an eine Vakuumquelle angeschlossen ist.

14. Vorrichtung nach einem oder mehreren der Ansprüche 4 bis 13,
dadurch gekennzeichnet,
daß jeder Hilfsdorn (12) ein System von Kanälen (14) aufweist, die mit Ausgangsöffnungen (15) verbunden sind, die in die Aussparung (13) münden.

## Claims

1. Apparatus for manufacturing two- or multi-compartment tubes from tubular members (6, 6', 6"), which contain a dividing wall (7) or several dividing walls (18, 19; 20) and are provided with a tube head with a closable discharge opening, using mandrels, which reproduce the inner contour of the desired tube and can be supplied to work stations, the mandrels being longitudinally divided corresponding to the number of compartments provided into individual partial mandrels (3, 4; 17a, b, c; 21a, b) leaving a dividing gap (5) between them and the respective partial mandrels (3, 4; 17a, b, c; 21a, b) having a cross-section which corresponds to the cross-section of the cavity of an individual compartment of the respective multi-compartment tube.

2. Apparatus according to Claim 1, characterised in that it comprises at least one auxiliary mandrel (12) for receiving a tubular member (6) with at least one dividing wall (7) attached to its inner wall so that it can be deflected, the auxiliary mandrel (12) being able to be brought into a coaxial position with respect to one of the partial mandrels (3; 4) of at least one mandrel and comprising at least one axially aligned recess (13) open towards the periphery and that means are provided for introducing at least one section of the deflectable dividing wall (7) into the recess (13) and for pushing the tubular member (6) from the auxiliary mandrel (12) onto a mandrel.

3. Apparatus according to Claim 2, characterised in that each auxiliary mandrel (12) is constructed as a solid mandrel, whereof the cross-section corresponds to the cross-section of one of the compartments of the multi-compartment tube to be manufactured and the recess (13) represents the remaining cross-section of the multi-compartment tube to be manufactured.

4. Apparatus according to one of Claims 2 or 3, characterised in that the means for introducing a section of the dividing wall (7) into the recess (13) contain a vacuum source which can be switched off.

5. Apparatus according to one of Claims 1 to 4, characterised in that at right angles to its longitudinal extent each dividing gap (7) has a rectilinear cross-section.

6. Apparatus according to one of Claims 1 to 4, characterised in that at right angles to its longitudinal extent each dividing gap (5) has a curved cross-section.

7. Apparatus according to Claim 6, characterised in that at right angles to its longitudinal extent the dividing gap (5) has an S-shaped cross-section.

8. Apparatus according to one or more of Claims 1 to 7, characterised in that at least one partial mandrel (3) is arranged to be displaceable with respect to one or more other partial mandrel(s) (4) axially and parallel relative to each other.

9. Apparatus according to Claim 8, characterised in that a partial mandrel (4) is arranged in a stationary manner on a holder (2).

10. Apparatus according to Claim 9, characterised in that the holder (2) is arranged to rotate.

11. Apparatus according to one or more of Claims 1 to 10, characterised in that each partial mandrel (3, 4) comprises projections (8) directed towards each other and reducing in one plane the cross-section of the dividing gap (5) therebetween.

12. Apparatus according to Claim 11, characterised in that starting from the section with a reduced cross-section, each dividing gap (5) has an initial section with an enlarged cross-section.

13. Apparatus according to one or more of Claims 1 to 12, characterised in that at least one partial mandrel (3) comprises a channel system, which is provided with outlet openings, which are directed towards the dividing gap (5) and/or towards the outer periphery, the channel system being connected to a source of vacuum such that it can be switched off.

14. Apparatus according to one or more of Claims 4 to 13, characterised in that each auxiliary mandrel (12) comprises a system of channels (14), which are connected to outlet openings (15), which open into the recess (13).

## Revendications

1. Dispositif servant à fabriquer des tubes à deux ou à plusieurs compartiments, constitués de corps tubulaires (6, 6', 6"), contenant une paroi de séparation (7) ou plusieurs parois de séparation (18, 19; 20) et comportant une tête de tube avec un orifice de sortie pouvant être fermé par l'intermédiaire de mandrins, reproduisant le contour intérieur du tube voulu et pouvant être amenés vers des stations de travail, les mandrins pouvant, en fonction du nombre de compartiments prévu, être divisés dans le sens de la longueur en mandrins partiels (3; 4; 17a,b,c; 21a,b), une fente de séparation (5) étant maintenue entre eux, les mandrins partiels (3, 4; 17a,b,c; 21a,b) correspondants ayant une section transversale correspondant à celle de l'espace creux d'un compartiment individuel du tube correspondant à plusieurs compartiments.

2. Dispositif selon la revendication 1, caractérisé en ce qu'il comporte au moins un mandrin auxiliaire (12) destiné à recevoir un corps tubulaire (6), comportant au moins une paroi de séparation (7) fixée sur sa paroi interne de sorte à pouvoir être déplacée, le mandrin auxiliaire (2) pouvant ainsi être mis dans une position coaxiale par rapport à un des mandrins partiels (3; 4) d'au moins un mandrin, et comportant au moins un évidement (13) ouvert et à orientation axiale par rapport à la circonférence, et en ce qu'il comporte des moyens permettant d'insérer au moins une section de la paroi de séparation à déplacement (7) dans l'évidement (13) et pour faire coulisser le corps tubulaire (6) du mandrin auxiliaire (12) sur un mandrin.

3. Dispositif selon la revendication 2, caractérisé en ce que chaque mandrin auxiliaire (12) est constitué sous forme d'un corps plein, dont la section transversale correspond à la section transversale d'un des compartiments du tube à plusieurs compartiments devant être fabriqué, l'évidement (13) reproduisant le reste de la section transversale du tube à plusieurs compartiments devant être fabriqué.

4. Dispositif selon l'une des revendications 2 ou 3, caractérisé en ce que le moyen servant à insérer une section de la paroi de séparation (7) dans l'évidement (13) comporte une source de vide pouvant être déconnectée.

5. Dispositif selon l'une des revendications 1 à 4, caractérisé en ce que chaque fente de séparation (5) présente une section transversale droite dans une direction verticale par rapport à son extension longitudinale.

6. Dispositif selon l'une des revendications 1 à 4, caractérisé en ce que chaque fente de séparation (5) présente une section transversale courbée dans une direction verticale par rapport à son extension longitudinale.

7. Dispositif selon la revendication 6, caractérisé en ce que la fente de séparation (5) présente une section transversale en S dans une direction verticale par rapport à son extension longitudinale.

8. Dispositif selon l'une ou plusieurs des revendications 1 à 7, caractérisé en ce qu'au moins un mandrin partiel (3) est agencé par rapport à un ou à plusieurs des autres mandrins partiels (4) de sorte à pouvoir être déplacé axialement et parallèlement par rapport à celui-ci ou à ceux-ci.

9. Dispositif selon la revendication 8, caractérisé en ce qu'un mandrin partiel (4) est agencé de manière fixe sur un support (2).

10. Dispositif selon la revendication 9, caractérisé en ce que le support (2) est agencé de sorte à pouvoir tourner.

11. Dispositif selon l'une ou plusieurs des revendications 1 à 10, caractérisé en ce que chaque mandrin partiel (3,4) comporte des saillies opposées (8) réduisant au moins dans un plan la section transversale de la fente de séparation (5) entre eux.

12. Dispositif selon la revendication 11, caractérisé en ce que chaque fente de séparation (5) comporte une section d'entrée à section transversale accrue s'étendant à partir de la section à section transversale réduite.

13. Dispositif selon l'une ou plusieurs des revendications 1 à 12, caractérisé en ce qu'au moins un mandrin partiel (3) comporte un système de canaux, comportant des orifices de sortie, orientés vers la fente de séparation (5) et/ou vers la circonférence externe, le système de canaux étant raccordé à une source de vide et pouvant en être déconnecté.

14. Dispositif selon l'une ou plusieurs des revendications 4 à 13, caractérisé en ce que chaque mandrin auxiliaire (12) comporte un système de canaux (14) reliés à des orifices de sortie (15) débouchant dans l'évidement (13).
